Europäisches Patentamt

European Patent Office

Office européen des brevets

(19)

(11) Publication number: **0 311 292**
**A2**

(12) # EUROPEAN PATENT APPLICATION

(21) Application number: **88308982.3**

(22) Date of filing: **28.09.88**

(51) Int. Cl.4: **C08J 5/12 , C08J 7/12**

(30) Priority: **29.09.87 BG 81312/87**

(43) Date of publication of application:
**12.04.89 Bulletin 89/15**

(84) Designated Contracting States:
**CH DE ES FR GB IT LI NL**

(71) Applicant: **SU "KLIMENT OHRIDSKI"**
**Boul. Ruski**
**Sofia(BG)**

(72) Inventor: **Avramova, Nadka Vassileva**
**Komplex Mladost-4 Block 444-A**
**Sofia(BG)**
Inventor: **Fakirov, Stoyko Hristov**
**Komplex Hypodruma Block 108-E**
**Sofia(BG)**
Inventor: **Schultz, Jerold Marvin**
**Dep. of Chemical Engineering, Univ. of**
**Delaware**
**Newark Delaware 19716(US)**

(74) Representative: **Silverman, Warren et al**
**HASELTINE LAKE & CO. Hazlitt House 28**
**Southampton Buildings Chancery Lane**
**London WC2A 1AT(GB)**

(54) Method for welding polymer structures containing amide linkages.

(57) Laminates and other composite polymer bodies are produced by a welding procedure wherein polymer bodies containing amide linking groups are wetted with a paraformaldehyde/methanol solution and the wetted bodies are pressed together at from 5 to 40°C under pressing conditions such that good contact between the surface is achieved.

EP 0 311 292 A2

## METHOD FOR WELDING POLYMER STRUCTURES CONTAINING AMIDE LINKAGES

This invention relates to a method for welding polymer structures containing amide linkages and has particular, but not exclusive application to the production of various widely used polyamide articles especially those comprising a plurality of foils welded together.

It is known that polymer laminates, including polyamide laminates can be obtained using special glues, bonding chemicals, or self-bonding polymers (e.g. polyamide foils) at high temperature and pressure (see New Linear Polymers, E.Lee, D.Stoffey and K.Neville, McGraw-Hill Book Company 1967).

The methods suffer disadvantages due to the fact that complex and expensive chemical compounds and glue compositions are used and the processes involve high energy consumption. In addition bonding is not always satisfactory. Moreover, the properties of the bonding compounds often give rise to deterioration of the properties of the polymer used, e.g. thermal stability may be lower. Lamination of oriented foils at high temperature by self-bonding leads to a decrease in the degree of orientation and hence to deterioration of the physico-mechanical characteristics of the laminate obtained.

It is known that polyamide-6 can be cross-linked in the amorphous regions by methoxy-methylation, i.e. methylene bridges bond together the amide groups of neighbouring macrochains (see T.Arakawa, P.Nagatoshi and K.Arai, J.Polym. Sci. Polym. Lett. Ed., 6; 513-516, 1968). In this method, polyamide is dipped into a solution of paraformaldehyde in methanol with the addition of small amounts typically of potassium hydroxide, and anhydrous oxalic acid is used as catalyst. After 36 hours at 30°C the cross-linking agent penetrates into the polymer and reacts with the amide groups, making methylene bridges.

Cross-linking improves the polymer strength but it has the following disadvantages. In the case where polymer granules are used, subsequent processing of the polymer will be hampered by the increased viscosity of its melt as the penetration of the cross-linking agent into the polymer is a slow, diffusion process. Thus the methoxy-methylation of polyamide articles, having a considerable volume, could prove too time-consuming for application on an industrial scale.

An object of the invention is to provide an improved method for welding and laminating polymers, containing amide linkages.

According to the present invention, there is provided a method for welding bodies formed of polymers containing amide linking groups, wherein the polymer bodies are wetted with a paraformaldehyde/methanol methoxy-methylating solution and the wetted bodies are pressed together at from 5 to 40°C under pressing conditions such that good contact between the surfaces to be welded is achieved.

A method according to the invention is carried out on polymers containing amide groups, for example synthetic polyamides and natural proteins or polypeptides. The method is based on the creation of methylene bridges between the nitrogen atoms of two closely situated amide groups. Thus a methoxy-methylation reaction occurs between the contacting surfaces of two physically independent, separate bodies. To achieve this the polymer bodies are coated (wetted) with a methoxy-methylating solution of paraformaldehyde in methanol (preferably paraformaldehyde:methanol from 0.2:1 to 1:5) to which traces of alkali, preferably KOH are usually added. A catalyst such as oxalic acid will usually also be added. The polymer bodies are then pressed together (pressure of 0.05 to 5 MPa is preferred) in order to achieve good contact between the surfaces and the solution. This operation may be carried out in a drill press vice for from 30 minutes to 36 hours. A measurable effect can be observed even after 30 minutes while after 36 hours the weld is so strong that in a shear test the material breaks outside the welded area.

The method of the invention is not a mechanical one as in the known methods, since it is based on the formation of a chemical bond and thus the bonds formed are very strong. The method does not require high energy consumption since it can be carried out even without heating and hence the polymer will not undergo any unfavourable changes associated with heating. As this method can be carried out without heating, lamination of oriented foils can proceed without loss of the oriented state. Moreover, by using polyamide foils the formation of methylene bridges (cross-linking) takes place in the entire volume of the laminate obtained regardless of its thickness. The proposed method is convenient, using a single solution, and simple, and does not require expensive bonding compounds. The method according to the invention allows the possibility of welding two, three or more physically different bodies which may even differ in their chemical nature. The bodies may be formed not only of synthetic polyamides like polyamide 6, polyamide 12, etc., but also natural proteins, e.g. animal membranes and polypeptide all of which contain amide linkages. The sole prerequisite for the starting materials in the formation of a chemical bond according to the method of the present invention is the presence of amide groups (-CO-NH-) in the polymer macromolecule.

By creating a chemical bond between the separate polymer bodies, one avoids both residual substances which could change the polyamide properties, and the use of extreme conditions (e.g. high temperature) which reduce the quality of the starting polymer material, especially in the case when the latter has been subjected to a preliminary orientation.

The following Example illustrates this invention.

## EXAMPLE

Oriented isotropic polyamide foils are coated (wetted) uniformly with a methoxy-methylating solution prepared from 75 g paraformaldehyde and 0.1 g potassium hydroxide, added to 75 g of methanol. The mixture is heated at 60° C until a clear liquid is obtained. 6 g of anhydrous oxalic acid is then added as the catalyst of the reaction. Foils coated with the above mixture are pressed in a drill press vice and are stored thus for 36 hours at a temperature of 30° C to yield a laminated body having the advantages described herein.

## Claims

1. A method for welding bodies formed of polymers containing amide linking groups, characterised in that the polymer bodies are wetted with a paraformaldehyde/ methanol methoxy-methylating solution and then pressing the wetted bodies together at from 5 to 40° C under pressing conditions such that good contact between the surface is achieved.

2. A method as claimed in claim 1, wherein the polymer is a polyamide, protein or polypeptide.

3. A method as claimed in any preceding claim, wherein said solution has a paraformaldehyde to methanol ratio from 0.2:1 to 1:5.

4. A method as claimed in any preceding claim, wherein said solution contains a catalyst for the methoxy methylation.

5. A method as claimed in claim 4, wherein the catalyst is oxalic acid.

6. A method as claimed in any preceding claim, wherein said solution contains trace amounts of alkali.

7. A method as claimed in any preceding claim, wherein said bodies are polymer foils which are laminated together under said pressing conditions.

8. A method as claimed in claim 7, wherein the wetted bodies are pressed in a drill press vice for from 30 minutes to 36 hours.

9. A method as claimed in claim 8, wherein the wetted bnodies are pressed in the drill press at a pressure of 0.05 MPa to 5 MPa.